# EUROPEAN PATENT APPLICATION

(11) **EP 4 644 162 A1**
(43) Date of publication of application: **05.11.2025**
(21) Application number: 24305697.5
(22) Date of filing: 02.05.2024
(51) Int. Cl.: B60L 7/02, B61C 3/00

(54) **HOT AIR OUTLET FOR A GROUND VEHICLE**

(71) Applicant: SpeedInnov, 75008 Paris (FR)
(72) Inventor: DO, Huu-thi, 17300 ROCHEFORT (FR)
(74) Representative: Plasseraud IP

(57) **Abstract**

A hot air outlet (10) comprising an outer cover (12), comprising a front transversal edge (14) and a back transversal edge (15) delineating an exhaust opening (13) between them. The hot air outlet also comprises a deflector (11) comprising: a front upright ridge (21), protruding from the outer cover (12) at the front transversal edge (14), parallel to the front transversal edge (14); a back upright ridge (22), protruding from the outer cover (12) at the back transversal edge (15), parallel to the back transversal edge (15); and a deflector bridge (23), connecting the front upright ridge (21) to the back upright ridge (22), so as to be arranged over the exhaust opening (13), wherein the front upright ridge (21) extends transversally beyond the deflector bridge (23) and wherein the back upright ridge (22) extends transversally beyond the deflector bridge (23).

## Description

The present invention concerns a hot air outlet, for a ground vehicle, and a railway vehicle comprising a hot air outlet.

Railway vehicles such as high-speed trains are often equipped with a dynamic braking device, usually arranged under the roof of said railway vehicle. The dynamic braking device is configured to decelerate the railway vehicle by using the electric motor as a generator. For decelerating the vehicle, the motor is driven in rotation by the wheels of the vehicle as the vehicle travels and decelerates. The motor thereby generates electrical power mechanically and in turn resists to the rotation of the wheels, causing the deceleration of the vehicle. The generated electrical power is then dissipated in the form of heat, for example, by means of a rheostat, arranged close to the roof of the vehicle. The heat then needs to be discharged through an opening formed on the roof of the vehicle.

EP3293035A1 discloses a vehicle where the dynamic braking system is arranged under a pantograph. A thermal deflector is arranged under the pantograph and covers the rheostat. The deflector comprises lateral openings and includes a panel positioned between the rheostat and the pantograph, the panel being transversally larger than the pantograph. Thus, hot air is discharged laterally and cannot reach the pantograph.

However, a drawback of this known thermal deflector is to be laterally bulky. Another drawback of this known thermal deflector concerns rejecting the hot air at the lateral sides of the roof of the train, although it would in some cases be more efficient to reject the hot air over the roof instead, in particular when no equipment is positioned over the hot air outlet. Nevertheless in that case, although the hot air is discharged upwards when the vehicle is at low speed, the hot air is forced against the roof of the vehicle when the vehicle reaches a high speed. Equipment located on the roof, in alignment with the hot air outlet along the direction of travel, may be adversely affected, in terms of reliability and/or service life.

The invention aims at proposing a hot air outlet with less lateral bulk and more efficient discharge of hot air, although not adversely affecting equipment located in the direction of travel.

To this end, aspects of the invention pertains to a hot air outlet, for a ground vehicle, wherein the hot air outlet comprises a deflector and an outer cover, comprising a front transversal edge and a back transversal edge arranged parallel to the front transversal edge, so that an exhaust opening is delineated between the front transversal edge and the back transversal edge, wherein the exhaust opening is configured to discharge a flow of hot air from the ground vehicle. The deflector comprises:
- a front upright ridge, protruding from the outer cover at the front transversal edge, parallel to the front transversal edge;
- a back upright ridge, protruding from the outer cover at the back transversal edge, parallel to the back transversal edge; and
- a deflector bridge, connecting the front upright ridge to the back upright ridge, so as to be arranged over the exhaust opening, wherein the front upright ridge extends transversally beyond the deflector bridge and wherein the back upright ridge extends transversally beyond the deflector bridge..

In use, the front upright ridge and the back upright ridge are preferably parallel to a travel direction of travel of the ground vehicle. Thanks to the invention, as the front and back upright ridges protrude from the outer cover and extend laterally beyond the deflector bridge, the hot air has to flow around and/or over the upright ridge positioned at the back in consideration of the travel direction. At low speed, the flow of hot air is therefore lifted away from the outer cover by the upright ridge. At high speed where the flow of hot air tends to be pushed against the outer cover despite being lifted up by the upright ridge, the flow of hot air is also divided in two separate parts by the deflector bridge, so as to be spread transversally along the outer cover, into a curtain-shaped flow of hot air. Since the hot air is spread transversally, any equipment located at the back of the hot air outlet in consideration of the direction of travel is not affected, or is only mildly affected, by the less dense flow of hot air. In addition to transversal spreading the flow hot air, the deflector bridge also separates the flow of hot air into two separate hot air parts, shaped as curtains. Between the two hot air curtains, a thin trail of cool ambient air is arranged in the direction of travel, extending from the deflector bridge. Critical or fragile equipment may thus conveniently be aligned with the deflector bridge in the direction of travel, so as not to be reached by the hot air and to be reached by the thin trail of cool ambient air instead.

Optionally, the invention may include one or more of the following features, considered individually or according to any technically admissible combination:
- each upright ridge comprises an outward side, opposite to the other upright ridge, wherein each outward side is beveled.
- the deflector bridge comprises a bottom side, arranged between the upright ridges, the bottom side comprising two lateral oblique faces, each lateral oblique face connecting the upright ridges, wherein the lateral oblique faces are oriented obliquely toward the exhaust opening and away from each other.
- the deflector comprises a separator wall, protruding from the deflector bridge towards the exhaust opening, wherein the separator wall connects the upright ridges.

Aspects of the invention also pertain to a railway vehicle, comprising the hot air outlet as defined above, wherein the railway vehicle is configured to travel along a travel direction, wherein the front upright ridge and the back upright ridge are transversal relative to the travel direction and the deflector bridge is parallel to the travel direction.

Optionally, the invention may include one or more of the following features, considered individually or according to any technically admissible combination:
- the outer cover belongs to a roof of the railway vehicle, so that the hot air outlet is positioned at the roof.
- the railway vehicle comprises a telecommunication device, wherein the deflector bridge and the telecommunication device are aligned along the travel direction.
- wherein the railway vehicle comprises a dynamic braking system, wherein the flow of hot air to be discharged by the exhaust opening is produced by the dynamic braking system.

The invention will be better understood, and other advantages thereof will appear more clearly, in light of the following description, provided solely as a non-limiting example and in reference to the appended drawings, wherein:
- Figure 1 shows a side view of a railway vehicle according to an embodiment of the invention;
- Figure 2 shows a perspective view of a hot air outlet arranged on a roof of the railway vehicle of figure 1;
- Figure 3 shows a cross-sectional view of the hot air outlet of figure 2;
- Figure 4 shows at top view of the hot air outlet of figures 2 and 3.

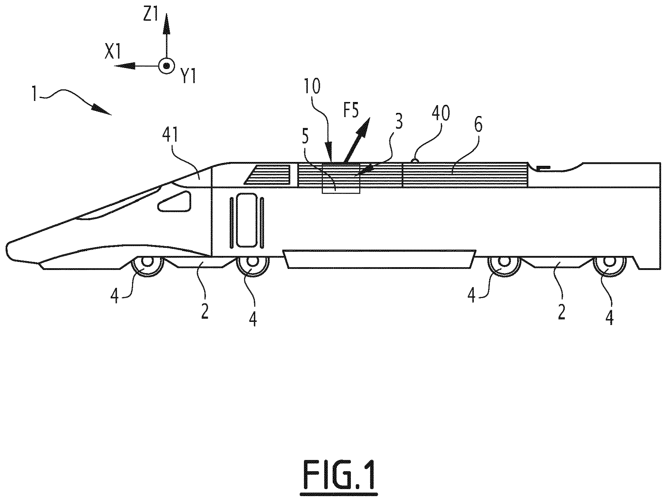

Figure 1 shows a ground vehicle 1 according to the invention. Preferably, the ground vehicle 1 is a railway vehicle, such as a train, preferably a high speed train. The railway vehicle can alternatively be a tramway vehicle or a subway vehicle. The invention may also apply to other types of ground vehicles. The ground vehicle 1 includes one or more electric motor 2, configured to propel the vehicle 1 along a travel direction X1 when electrically powered. The travel direction X1 is a longitudinal direction. The motors 2 may propel the vehicle forward along the travel direction X1, or backward along the same travel direction X1, by rotating wheels 4 of the vehicle 1.

The vehicle 1 also defines a transversal direction Y1, perpendicular to the travel direction X1. When the vehicle rests on a horizontal railway, the directions X1 and Y1 are horizontal. The vehicle 1 also defines a height direction Z1, perpendicular to the travel direction X1 and to the transversal direction Y1. The direction Z1 is directed upwards.

The vehicle 1 preferably comprises a dynamic braking system 3, located inside the vehicle 1, close to, or inside, a roof 6 of the vehicle 1. The dynamic braking system 3 may include a rheostat. The dynamic braking system 3 is configured to decelerate the railway vehicle 1 by using the electric motors 2 as a generators. For decelerating the vehicle 1, the motors 2 are driven in rotation by the wheels 4 of the vehicle 1 as the vehicle 1 travels forward or backward along the travel direction X1. The motors 2 thereby generate electrical power mechanically and in turn resist to the rotation of the wheels 4, causing a deceleration of the vehicle 1 by dynamic braking of the wheels 4. The generated electrical power is then dissipated in the form of heat by means of the braking system 3, in particular by means of the rheostat. The system 3 includes a heat exchanger 5 for dissipating said heat, the heat exchanger implementing a flow of air for cooling the rheostat. The flow of air includes a flow of cool air admitted into the heat exchanger 5, which may be outside air at environmental temperature. In cooling the rheostat, the flow of cool air turns into a flow of hot air F5, which is then discharged from the vehicle 1. More generally, the hot air F5 is produced by the dynamic braking system 3 when in use.

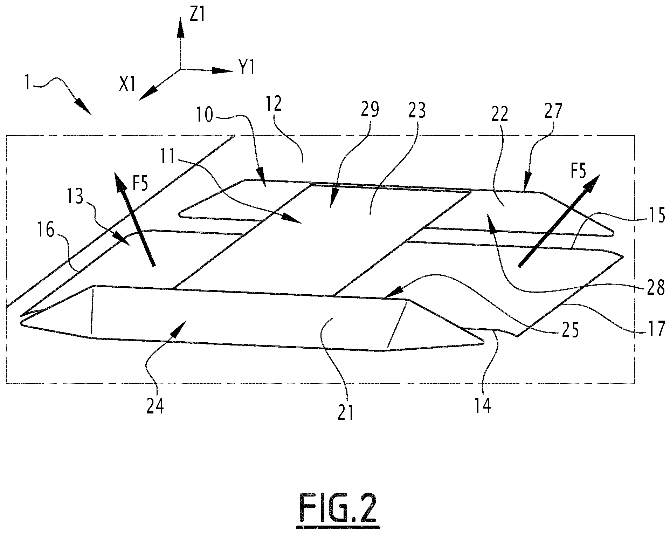

As best visible in figures 2 to 4, for discharging said hot air F5, the vehicle 1 includes a hot air outlet 10, comprising a deflector 11, and an outer cover 12 forming an exhaust opening 13. More precisely, the hot air F5 is discharged through the exhaust opening 13. The exhaust opening 13 is in fluid connection to the heat exchanger 5.

The outer cover 12 forms an outer bodywork of the roof 6. The outer cover 12 is overall planar and is oriented perpendicular to direction Z1. The exhaust opening 13 is arranged through the outer cover 12 and opens upwards, along direction Z1. The outer cover 12 comprises a front transversal edge 14, a back transversal edge 15, a lateral edge 16 and a lateral edge 17, delineating the exhaust opening 13 between them. The edges 14 and 15 are parallel to direction Y1 and to each other. The edges 16 and 17 are parallel to direction X1 and connect the edges 14 and 15 together.

The deflector 11 comprises a front upright ridge 21, a back upright ridge 22 and a deflector bridge 23.

The ridges 21 and 22 both protrude from the outer cover 12 along direction Z1. The ridges 21 and 22 are arranged at either sides of the exhaust opening 13. In particular, the ridge 21 is arranged at the edge 14 and the ridge 22 is arranged at the edge 15. The ridge 21 is preferably distant from the edge 14 along direction X1 and the ridge 22 is preferably distant from the edge 15 opposite to direction X1.

Each ridge 21 and 22 is parallel to direction Y1, so as to be parallel to the edges 14 and 15. In other words, each ridge 21 and 22 is transversal relative to the travel direction X1. Along direction Y1, the ridge 21 is slightly shorter or is as long as the edge 14. Along direction Y1, the ridge 22 is slightly shorter or is as long as the edge 15.

Preferably, the upright ridge 21 has an outward side 24 directed along direction X1, i.e. opposite to the other ridge 22, and an inward side 25 oriented opposite to direction X1, i.e. towards the other ridge 22. Preferably, the outward side 24 forms a beveled surface so that, when the vehicle 1 travels forward in direction X1, the ridge 21 is aerodynamic. Preferably, the inward side 25 forms a surface perpendicular to direction X1, thereby contributing to guide the flow of hot air F5.

Preferably, the upright ridge 22 has an outward side 27 directed opposite to direction X1, i.e. opposite to the other ridge 21, and an inward side 28 oriented along direction X1, i.e. towards the other ridge 21. Preferably, the outward side 27 forms a beveled surface so that, when the vehicle 1 travels backwards, opposite to direction X1, the ridge 22 is aerodynamic. Preferably, the inward side 28 forms a surface perpendicular to direction X1, thereby contributing to guide the flow of hot air F5.

Preferably, the ridges 21 and 22 are identical and arranged symmetrically. One of the ridges may be smaller than the other in the direction Y1.

The deflector bridge 23 connects the front upright ridge 21 to the back upright ridge 22, so as to be arranged over the exhaust opening 13 in the direction Z1. Overall, the bridge 23 extends along the travel direction X1, from the ridge 22 to the ridge 21. In particular, the bridge 23 connects the side 25 to the side 28. The bridge 23 is centered relative to the opening 13 and the ridges 21 and 22 along direction Y1.

The bridge 23 preferably has an upper face 29, which is preferably planar, perpendicular to direction Z1. The upper face 29 preferably connects an upper transversal edge of the ridge 22 to an upper transversal edge of the ridge 21 along direction X1. Each upper edge delimits the outer side from the inward side of the upright ridge and is parallel to direction Y1.

The front upright ridge 21 extends laterally beyond the deflector bridge 23, i.e. the deflector bridge 23 is less large than the ridge 21 along direction Y1. The back upright ridge 22 extends laterally beyond the deflector bridge 23, i.e. the deflector bridge 23 is less large than the ridge 22 along direction Y1. Therefore, the bridge 23 does not cover an entire cross-section of the opening 13, but rather divides the cross-section into two parts.

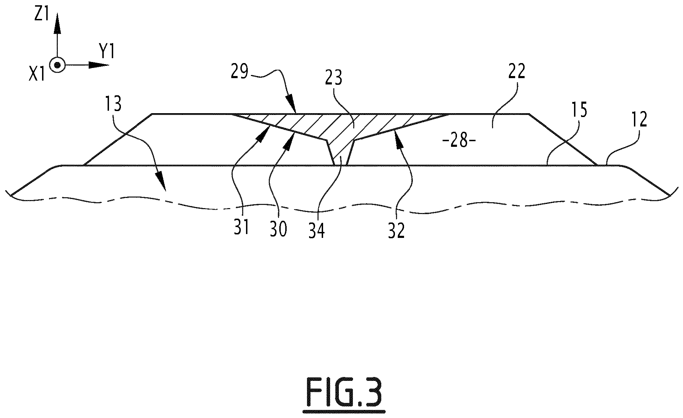

As visible in figure 3, the deflector bridge 23 comprises a bottom side 30, arranged between the upright ridges 21 and 22, opposite to the upper face 29. The bottom side 30 comprises a lateral oblique face 31 and a lateral oblique face 32. Each oblique face 31 and 32 connects the upright ridges 21 and 22 along direction X1, in particular the inward sides 25 and 28. Each lateral oblique face 31 and 32 is oriented obliquely toward the exhaust opening 13 and away from each other, in a symmetrical arrangement. Each face 31 and 32 is oblique relative to the direction Y1 and relative to the direction Z1, and parallel to the direction X1. These oblique faces 31 and 32 contribute to separating the hot air F5 discharged upwardly from the opening 13 into two separate parts which spread more easily along direction Y1 when the vehicle 1 travels at high speed. These two flow parts indeed need to flow around and/or over the ridge 22, if the vehicle 1 travels forward, or around and/or over the ridge 21 if the vehicle 1 travels backward.

Preferably, as visible in figure 3, the deflector 11 comprises a separator wall 34, protruding from the deflector bridge 23 towards the exhaust opening 13, i.e. opposite to direction Z1. In particular, the separator wall 34 protrudes from the bottom side 30, from between the oblique faces 31 and 32. The wall 34 is preferably centered relative to the bridge 23, along direction Y1. The separator wall 34 connects the upright ridges 21 and 22 along direction X1, in particular connects the inward sides 25 and 28. The separator wall 34 preferably does not extend beyond the edges 14 and 15, in a direction opposite to the direction Z1. The separator wall 34 also contributes separating the hot air F5 discharged upwardly from the opening 13 into two separate flows which spread more easily along direction Y1 at high speed of the vehicle 1, as they then need to flow around the ridge 22, if the vehicle 1 travels forward, or around the ridge 21 if the vehicle travels backward.

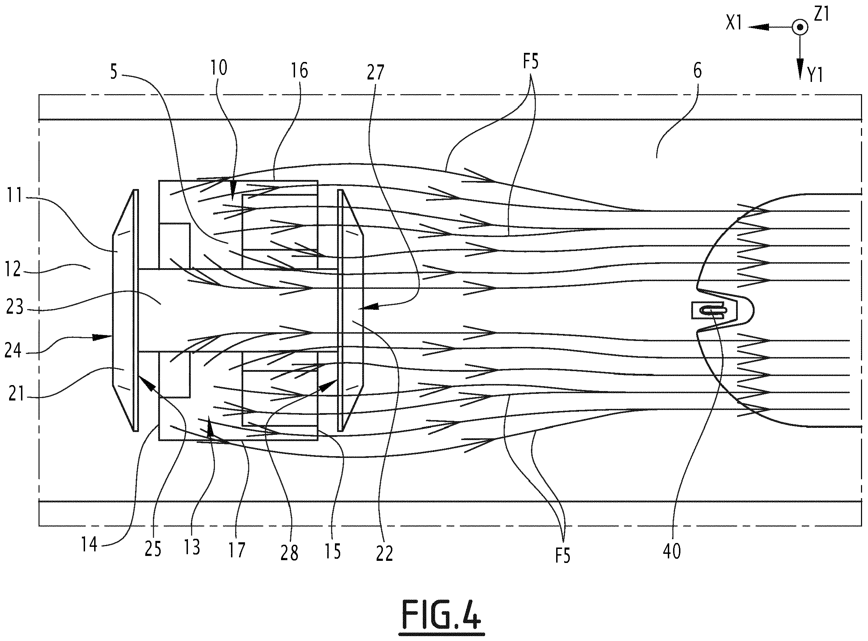

As visible in figures 1 and 4, the vehicle 1 preferably includes a telecommunication device 40, which may include an antenna, for example for telecommunications between the vehicle 1 and ground stations or the like. The telecommunication device 40 is positioned on the roof 6, in alignment with the bridge 23 and the separator wall 34, along the direction of travel X1. In particular, said bridge 23 and wall 34 are arranged in direction X1 relative to the telecommunication device 40. Preferably, the telecommunication device 40 protrudes from the outer cover 12, at a distance from the ridge 22 in a direction opposite to direction X1.

As visible in figure 1, the vehicle 1 preferably includes a front box 41, which may contain electronic or electric components, such as sensors, detectors, or headlights of the vehicle 1. The font box 41 is positioned on the roof 6, in alignment with the hot air outlet 10, along the direction of travel X1. In particular, said front box 41 is arranged in direction X1 relative to hot air outlet 10, at a distance from the ridge 21.

As shown in figure 4, when the vehicle 1 travels forward in direction X1, the flow of hot air F5 is discharged in direction Z1 from the opening 13 and is split into two parts by the bridge 23. Each of the two parts of the flow of hot air F5 then has to flow around and over the ridge 22. The combination of the bridge 23 and the ridge 22, when the vehicle 1 is at high speed, tends to spread each part of the flow of hot air F5 along direction Y1, while the flow of hot air F5 mostly travels in a direction opposite to direction X1 relative to the vehicle 1. As shown in figure 4, each of the two parts of the flow of hot air F5 forms a hot air curtain. Thanks to the deflector 11, a trail of cool air flows opposite to direction X1 relative to the vehicle 1, and separates the two parts of the flow F5 starting from the bridge 23. Since the bridge 23 and the telecommunication device 40 are aligned along direction X1, the telecommunication device 40 is not reached by the flow F5 but is instead bathed in the flow of cool air between the two parts of the flow F5.

When the vehicle 1 travels backwards, i.e. opposite to direction X1, the flow of hot air F5 is discharged in direction Z1 from the opening 13 and is split into two parts by the bridge 23. Each of the two parts of the flow of hot air F5 then has to flow around and over the ridge 21. The combination of the bridge 23 and the ridge 21, when the vehicle 1 is at high speed, tends to spread each part of the flow of hot air F5 along direction Y1, while the flow of hot air F5 mostly travels in direction X1 relative to the vehicle 1. Each of the two parts of the flow of hot air F5 forms a hot air curtain. Thanks to the deflector 11, a trail of cool air flows along direction X1 relative to the vehicle 1, and separates the two parts of the flow F5, starting from the bridge 23. Since the deflector 11 and the front box 41 are aligned along direction X1, the front box is reached by the two parts of the flow F5, which are sufficiently spread so that the flow F5 is not actually harmful for the components contained in the box 41.

It is to be understood that the present disclosure is not limited to the aspects described above and illustrated in the drawings. Rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the appended claims.

## Claims

1. A hot air outlet (10), for a ground vehicle (1), wherein the hot air outlet (10) comprises a deflector (11) and an outer cover (12), comprising a front transversal edge (14) and a back transversal edge (15) arranged parallel to the front transversal edge (14), so that an exhaust opening (13) is delineated between the front transversal edge (14) and the back transversal edge (15), wherein the exhaust opening (13) is configured to discharge a flow of hot air (F5) from the ground vehicle (1), **characterized in that** the deflector (11) comprises:
- a front upright ridge (21), protruding from the outer cover (12) at the front transversal edge (14), parallel to the front transversal edge (14);
- a back upright ridge (22), protruding from the outer cover (12) at the back transversal edge (15), parallel to the back transversal edge (15); and
- a deflector bridge (23), connecting the front upright ridge (21) to the back upright ridge (22), so as to be arranged over the exhaust opening (13), wherein the front upright ridge (21) extends transversally beyond the deflector bridge (23) and wherein the back upright ridge (22) extends transversally beyond the deflector bridge (23).

2. The hot air outlet (10) according to claim 1, wherein each upright ridge (21, 22) comprises an outward side (24, 27), opposite to the other upright ridge (21, 22), wherein each outward side (24, 27) is beveled.

3. The hot air outlet (10) according to any one of the preceding claims, wherein the deflector bridge (23) comprises a bottom side (30), arranged between the upright ridges (21, 22), the bottom side (30) comprising two lateral oblique faces (31, 32), each lateral oblique face (31, 32) connecting the upright ridges (21, 22), wherein the lateral oblique faces (31, 32) are oriented obliquely toward the exhaust opening (13) and away from each other.

4. The hot air outlet (10) according to any one of the preceding claims, wherein the deflector (11) comprises a separator wall (34), protruding from the deflector bridge (23) towards the exhaust opening (13), wherein the separator wall (34) connects the upright ridges (21, 22).

5. A railway vehicle (1), comprising the hot air outlet (10) according to any one of the preceding claims, wherein the railway vehicle (1) is configured to travel along a travel direction (X1), wherein the front upright ridge (21) and the back upright ridge (22) are transversal relative to the travel direction (X1) and the deflector bridge (23) is parallel to the travel direction (X1).

6. The railway vehicle (1) according to claim 5, wherein the outer cover (12) belongs to a roof (6) of the railway vehicle (1), so that the hot air outlet (10) is positioned at the roof (6).

7. The railway vehicle (1) according to any one of claims 5 and 6, wherein the railway vehicle (1) comprises a telecommunication device (40), wherein the deflector bridge (23) and the telecommunication device (40) are aligned along the travel direction (X1).

8. The railway vehicle (1) according to any one of claims 5 to 7, wherein the railway vehicle (1) comprises a dynamic braking system (3), wherein the flow of hot air (F5) to be discharged by the exhaust opening (13) is produced by the dynamic braking system (3).
